# EUROPÄISCHE PATENTSCHRIFT

(11) **EP 1 421 142 B1**
(45) Veröffentlichungstag und Bekanntmachung des Hinweises auf die Patenterteilung: **17.08.2005**
(21) Anmeldenummer: 02743130.3
(22) Anmeldetag: 31.05.2002
(51) Int. Cl.: C08L 67/04, C08K 3/00, C08J 5/18

(54) **BIOLOGISCH ABBAUBARE BIAXIAL VERSTRECKTE FOLIE MIT KONTROLLIERTEM WEITERREISSVERHALTEN**
BIODEGRADABLE BIAXIALLY DRAWN FILM WITH CONTROLLED TEAR RESISTANCE
FILM BIODEGRADABLE A ETIREMENT BIAXIAL ET A RESISTANCE AU DECHIREMENT CONTROLEE

(30) Priorität: 06.06.2001 DE 10127314
(43) Veröffentlichungstag der Anmeldung: 26.05.2004
(73) Patentinhaber: Treofan Germany GmbH & Co.KG, 66539 Neunkirchen (DE)
(72) Erfinder: ROSENBAUM, Sonja, DECEASED (DE); BUSCH, Detlef, 66740 Saarlouis (DE)
(86) Internationale Anmeldenummer: PCT/EP2002/005947
(87) Internationale Veröffentlichungsnummer: WO 2002/098982

(56) Entgegenhaltungen:
- EP-A- 0 510 998
- EP-A- 0 748 846
- WO-A-92/04412

## Beschreibung

Der Erfolg biaxial orientierter Kunststoffolien, insbesondere von Folien aus thermoplastischen Polymeren beruht im wesentlichen auf ihren hervorragenden mechanischen Festigkeitseigenschaften in Verbindung mit einem vergleichsweise geringen Gewicht, guten Sperreigenschaften und einer guten Verschweißbarkeit. Die Folie schützt das Packgut gegen schnelles Austrocknen bzw. gegen Verlust von Aromen bei sehr geringem Materialeinsatz.

Dem Bedürfnis des Verbrauchers nach einer hygienischen, optisch ansprechenden, fest verschlossenen und widerstandsfähigen Verpackung steht der Wunsch eines leichten und kontrollierbaren Öffnens entgegen. Letzteres wird von Verbrauchern bei den Verpackungen aus Polyolefinfolien zunehmend bemängelt und als Nachteil gegenüber Verpackungen aus Papier angesehen.

Uniaxial orientierte Folien, wie z.B. Bändchenware zeigen in Orientierungsrichtung eine ausgeprägt niedrige Einreißfestigkeit bzw. hohe Spleißneigung und lassen sich daher in diese Richtung problemlos kontrolliert ein- und weiterreißen. Uniaxial orientierte Folien sind jedoch für viele Gebiete nicht einsetzbar, unter anderem auf Grund mangelhafter mechanischer Festigkeiten in Querrichtung.

Der Prozeß der biaxialen Orientierung erzeugt einerseits die wünschenswerten hohe Festigkeiten (Moduli) in beiden Dimensionen; auf der anderen Seite werden dadurch aber auch prozeßbedingt die Vorzugsrichtungen partiell egalisiert. Dies hat zur Folge, daß zum Öffnen einer Folienverpackung aus biaxial orientierter Folie (z.B. Keksbeutel) zunächst eine hohe Kraft überwunden werden muß, um die Folie einzureißen. Ist die Folie jedoch einmal verletzt bzw. angerissen, so pflanzt sich ein Riß schon bei Anwendung sehr niedriger Zugkräfte unkontrollierbar fort. Diese mangelhaften Gebrauchseigenschaften einer zu hohen Einreißfestigkeit in Verbindung mit einem unkontrollierbaren Weiterreißverhalten vermindern - trotz der eingangs erwähnten Vorteile - die Akzeptanz von Folienverpackungen am Endverbrauchermarkt.

Zur Lösung dieses Problems wurden beispielsweise in der EP 0 781 652 die Verwendung einer peelbare Schicht in Verbindung mit einem speziellen Schichtaufbau vorgeschlagen. Dadurch wird es möglich, die Folienverpackung kontrolliert dort wieder zu öffnen, wo sie ursprünglich verschlossen wurde, nämlich in der Naht. Durch diese vorgesehene Sollbruchstelle soll verhindert werden, daß sich Risse beim Öffnen unkontrolliert in der Folie fortsetzen.

Eine weitere Lösung, die vorgeschlagen wurde, ist ein mehrschichtiger Schichtaufbau mit einer Sollbruchstelle in Form einer Schicht, die eine besonders geringe mechanische Festigkeit aufweist. Beim Öffnen reißt die Folie in dieser Sollbruchstelle ein. Der Riß pflanzt sich nur in der schwachen Schicht fort. Dieses Prinzip wird sowohl bei coextrudierten Folien als auch bei mehrschichtigen Laminaten realisiert.

Eine weitere, bekannte mögliche Lösung ist der nachträgliche, mechanische Einbau einer Sollbruchstelle in Form einer Perforation oder Einkerbung oder mechanischen Schwächung mittels Laser, als ein thermisches Verfahren zum partiellen, schichtweisen Abtrag, bzw. Verdrängung infolge plastischer Verformung.

In anderen Fällen bedient man sich eines Aufreißbandes (meist Polyester), um ein kontrolliertes Öffnen der Verpackung zu ermöglichen. Diese Lösung ist sehr teuer und hat sich deshalb im Markt nicht überall durchgesetzt.

Das unkontrollierte Weiterreißverhalten von biaxial orientierten Folien ist insbesondere bei Verpackungen von Nachteil die Stückgut beinhalten. Obwohl der Verbraucher in der Regel das verpackte Gut stückweise nacheinander entnehmen möchte, fallen ihm nach dem Einreißen Kekse, Gummibärchen oder Kartoffelchips unkontrolliert entgegen. Ein ähnliches Problem tritt bei Stückgut auf, welches nicht lose, sondern geordnet verpackt ist, wie z.B. bei Zigarettenstangen, Weetabix, Knäckebrot, Keksrollen und ähnliches. Diese Verpackungsarten sind besonders darauf abgestellt, daß der Verbraucher zunächst nur einzelne Stücke entnehmen und den verbleibenden Rest in der Verpackung aufbewahren möchte, um weitere Einheiten zu einem späteren Zeitpunkt zu entnehmen. Für diesen Anwendungsfall ist das unkontrollierte Weiterreißen der Folienverpackung besonders ärgerlich für den Verbraucher.

Es besteht daher seit langem ein Bedürfnis nach einem Verpackungsmaterial, welches ein kontrolliertes Aufreißverhalten zeigt und für die Hersteller von verbraucherfreundlichen Verpackungen geeignet ist.

Neben den Gebrauchseigenschaften der Verpackungsmaterialien spielt deren Entsorgung sowie die Rohstoffquellen zunehmend eine bedeutende Rolle. Recyclingsysteme entwickeln sich nur mühsam, haben eine fragliche Effektivität und sind oft nur regional, z. B. in Deutschland umgesetzt. Hinzu kommt, daß das Erdöl als das natürliche Ausgangsmaterial der thermoplastischen polyolefinischen Kunststoffe begrenzt ist. Diese Umstände führen zu der grundsätzlichen Forderung nach geeigneten Verpackungsmaterialien aus nachwachsenden Rohstoffen, die zusätzlich umweltfreundlich entsorgt werden können.

Dieses Bedürfnis hat zur Entwicklung von Polymeren geführt, deren Herstellkette mit nachwachsende Rohstoffen beginnt. Beispiele hierfür sind Polymere und Copolymere von Milchsäuren und anderen Hydroxycarbonsäuren, im folgenden als PLA bezeichnet. Diese werden bei einer bestimmten Luftfeuchtigkeit und erhöhter Temperatur langsam hydrolysiert und letztlich zu Wasser und CO₂ zersetzt. Diese Polymere sind daher als abbaubare Polymere bekannt und können aus pflanzlichen, nachwachsenden Rohstoffen hergestellt werden. Die Herstellung von PLA erfolgt großtechnisch über die Ringöffnungspolymerisation eines cyclischen Milchsäuredimers, welches Lactid genannt wird. Entsprechende Verfahren sind im Stand der Technik bekannt und beispielsweise in US-A-1,995,970 oder US-A-2,362,511 beschrieben.

Neben den Rohstoffen an sich sind im Stand der Technik auch Folienprodukte aus PLA bekannt. US 5,443,780 beschreibt beispielsweise die Herstellung von orientierten Folien aus PLA. Das Verfahren geht aus von einer PLA-Schmelze, welche extrudiert und schnell abgekühlt wird. Anschließend kann diese Vorfolie einem uniaxialen Streckprozeß unterworfen oder sequentiell oder simultan biaxial verstreckt werden. Die Strecktemperatur liegt zwischen der Glastemperatur und der Kristallisationstemperatur des PLA. Durch die Verstreckung wird eine gesteigerte Festigkeit und ein höherer Young'scher Modul bei der Endfolie erzielt. Gegebenenfalls erfolgt nach der Verstreckung eine Thermofixierung.

Die Aufgabe der vorliegenden Erfindung bestand darin, eine Folie zur Verfügung zu stellen, welche ein kontrolliertes Ein- und Weiterreißverhalten aufweist.

Diese Aufgabe wird durch eine biaxial verstreckte Folie gelöst, welche mindestens eine Basisschicht umfaßt, welche mindestens ein Polymeres I aus mindestens einer Hydroxycarbonsäure und ≥ 0,1 Gew.-%, bezogen auf das Gewicht der Schicht, eines Propylenpolymer oder Polyethylenpolymer enthalten.

Des weiteren wird diese Aufgabe durch eine biaxial verstreckte Folie gelöst, welche mindestens eine Basisschicht umfaßt, welche mindestens ein Polymeres 1 aus mindestens einer Hydroxycarbonsäure und ≥ 0,1-15 Gew.-%, bezogen auf das Gewicht der Schicht, eines anorganischen Füllstoff enthält.

Eine weitere Lösungen der Aufgabe ist in dem unabhängigen Ansprüch 3 angegeben. Die Verfahren, Verwendungen und Gegenstände der abhängigen Unteransprüche sind bevorzugte Ausführungsformen der Erfindung.

Erfindungsgemäß umfaßt die biaxial orientierte Folie mindestens eine Basisschicht, welche mindestens ein Polymeres 1 aus mindestens einer Hydroxycarbonsäure und 0,1 bis 15 Gew.-% des Polymeren II und/oder anorganische Füllstoffe, insbesondere 0,5 bis 10 Gew.-% jeweils bezogen auf die Basisschicht. Im Hinblick auf die Kompostierbarkeit der Verpackung ist es vorteilhaft, den Gehalt an Polymer II möglichst gering zu halten. Für solche kompostierbaren Ausführungsformen sollte die Menge an Polymer II 0,2 bis 5 Gew.-%, vorzugsweise 0,2 bis 3 Gew.-%, bezogen auf die Basisschicht, betragen.

Es wurde gefunden, daß der Zusatz der nachstehend näher beschriebenen thermoplastischen Polymeren II und/oder der anorganischen Zusatzstoffe in der Basisschicht das Reißverhalten der biaxial verstreckten Folie aus Polyhydroxycarbonsäure deutlich verbessert. Es wurde gefunden, daß Folien aus derartigen Mischungen in der Basisschicht sehr kontrolliert aufgerissen werden können. Ohne weitere Hilfsmittel, wie mechanische Schwächung, Perforierung, oder aufgeklebte Aufreißstreifen ist es möglich die Folie entlang einer gedachten Linien in dünne Streifen zu reißen. Somit lassen sich Verpackungen aus der erfindungsgemäßen Folie so öffnen als ob ein Aufreißstreifen vorhanden wäre, ohne daß ein solcher angebracht ist.

Im Rahmen der vorliegenden Erfindung wird unter der Basisschicht der Folie, diejenige Schicht verstanden, welche mindestens ein Polymeres I aus mindestens einer Hydroxycarbonsäure und ≥ 1-15 Gew.-%, bezogen auf das Gewicht der Schicht, eines von dem Polymeren I verschiedenen thermoplastischen Polymeren II und/oder anorganische Zusatzstoffe enthält und welche die größte Schichtdicke aufweist und mindestens 40% der Gesamtfoliendicke ausmacht. Bei einschichtigen Ausführungsformen besteht die Folie nur aus dieser Basisschicht. Bei mehrschichtigen Ausführungsformen weist die Folie zusätzliche auf dieser Basisschicht aufgebrachte Deckschichten und gegebenenfalls zusätzlich Zwischenschichten auf.

Der Begriff "Folie" bedeutet im Sinne der vorliegenden Erfindung sowohl eine einschichtige Folie welche nur aus dieser Basisschicht besteht als auch mehrschichtige Folien, welche die Basisschicht und zusätzliche Schichten umfassen.

Im Rahmen der vorliegenden Erfindung werden Polymere I aus mindestens einer Hydroxycarbonsäuren "PHC" (Polyhydroxycarbonsäuren) genannt. Hierunter sind Homopolymere oder Mischpolymerisate zu verstehen, welche aus polymerisierten Einheiten von Hydroxycarbonsäuren aufgebaut sind. Unter den für die vorliegende Erfindung geeigneten PHC sind insbesondere Polymilchsäuren geeignet. Diese werden nachstehend als PLA (Polylactidacid) bezeichnet. Auch hier sind unter dem Begriff sowohl Homopolymere, welche nur aus Milchsäureeinheiten aufgebaut sind, als auch Mischpolymerisate zu verstehen, welche überwiegend Milchsäureeinheiten (>50%) in Verbindungen mit anderen Comonomeren, insbesondere anderen Hydroxymilchsäureeinheiten enthalten.

Die erfindungsgemäße Folie zeigt sowohl in einer einschichtigen Ausführungsform als auch als mehrschichtige Ausführungsform das gewünschte Weiterreißverhalten. Mehrschichtige Folien sind in der Regel aus der Basisschicht und mindestens einer Deckschicht aufgebaut. Für die Deckschichten können grundsätzlich ebenfalls die für die Basisschicht beschriebenen Mischungen aus Polymer I und II verwendet werden. Grundsätzlich können auch Deckschichten aufgebracht werden welche nur aus PHC aufgebaut sind. Gegebenenfalls ist es auch möglich modifizierte PLA Rohstoffe in der Deckschicht einzusetzen. Die Deckschicht/en ist/sind entweder auf der Oberfläche der Basisschicht oder auf der Oberfläche einer gegebenenfalls zusätzlich vorhandenen Zwischenschicht aufgebracht.

Die Basisschicht der Folie enthält im allgemeinen mindestens 85 bis 99,5 Gew.-%, insbesondere 90 bis <99,5Gew.-%, jeweils bezogen auf die Schicht, eines Polymeren auf Basis einer Hydroxycarbonsäure und 0,1 bis 15 Gew.-%, vorzugsweise 0,5 bis 10 Gew.-%, insbesondere 0,5 bis 5 Gew.-% eines thermoplastischen Polymeren II und/oder anorganischen Zusatzstoffes, sowie gegebenenfalls zusätzlich übliche Additive in jeweils wirksamen Mengen.

Als Monomere der Polymeren auf Basis von Hydroxycarbonsäuren sind insbesondere Mono-, Di- oder Trihydroxycarbonsäuren, bzw. deren dimere cyclische Ester geeignet, worunter Milchsäure in ihrer D- oder L-Form bevorzugt ist. Ein besonders geeignetes PLA ist Polymilchsäure der Fa. Cargill Dow (NatureWorks®). Die Herstellung dieser Polymilchsäure ist im Stand der Technik bekannt und erfolgt über katalytische Ringöffnungspolymerisation von Lactid (1,4-Dioxan-3,6-dimethyl2,5-dion), dem dimeren cyclischen Ester der Milchsäure, daher wird PLA häufig auch als Polylactid bezeichnet. In den folgenden Veröffentlichungen ist die Herstellung von PLA beschrieben US 5,208,297, US 5,247,058 oder US 5,357,035.

Bevorzugt sind Polymilchsäuren, welche ausschließlich aus Milchsäureeinheiten aufgebaut sind. Hierbei sind insbesondere PLA Homopolymere bevorzugt, welche 80-100 Gew.-% L-Milchsäureeinheiten, entsprechend 0 bis 20 Gew.-% D-Milchsäureeinheiten, enthalten. Zur Verringerung der Kristallinität können auch noch höhere Konzentrationen D-Milchsäureeinheiten enthalten sein. Gegebenenfalls kann die Polymilchsäure zusätzliche von der Milchsäure verschiedene Mono- oder Polyhydroxysäureeinheiten als Comonomer aufweisen, beispielsweise Glycolsäureeinheiten, 3-Hydroxypropansäureeinhaiten, 2,2-Dimethyl-3-hydroxypropansäureeinheiten oder höhere Homologe von Hydroxycarbonsäuren mit bis zu 5 Kohlenstoffatomen.

Bevorzugt sind Milchsäurepolymere mit einem Schmelzpunkt von 110 bis 170°C, vorzugsweise von 125 bis 165°C, und einen Schmelzflußindex (Messung DIN 53 735 bei 2,16 N Belastung und 190°C) von 1 bis 50g/10 min, vorzugsweise von 1 bis 30 g/10 min. Das Molekulargewicht des PLA liegt im allgemeinen in einem Bereich von mindestens 10.000 bis 500.000 (Zahlenmittel), vorzugsweise 50.000 bis 300.000 (Zahlenmittel). Die Glasübergangstemperaur Tg liegt vorzugsweise in einem Bereich von 40 bis 100°C, vorzugsweise 40 bis 80°C.

Die thermoplastischen Polymeren II, welche der Basisschicht zugesetzt werden, verbessern das Ein- und Weiterreißverhalten der Folie gegenüber solchen Folien, welche eine Basisschicht aus PLA ohne diese thermoplastischen Polymeren aufweisen. Diese vorteilhafte Wirkung wurde insbesondere bei Mischungen aus PHC, vorzugsweise PLA und Polypropylenen, Mischungen aus PHC, vorzugsweise PLA, und Polyethylenen sowie Mischungen aus PHC, vorzugsweise PLA, und Polyestern gefunden.

Für die Mischungen geeignete Polypropylene sind Polymerisate, welche mindestens 50 Gew.-% Propyleneinheiten enthalten. Beispiele für geeignete Propylenpolymere als thermoplastisches Polymer II sind Propylenhomopolymere, Copolymere von Ethylen und Propylen oder Propylen und Butylen-1 oder Terpolymere von Ethylen und Propylen und Butylen-1 oder eine Mischung oder ein Blend aus zwei oder mehreren der genannten Homo-, Co- und Terpolymeren.

Insbesondere geeignet sind statistische Ethylen-Propylen-Copolymere mit einem Ethylengehalt von 1 bis 20 Gew.-%, bevorzugt 2,5 bis 10 Gew.-%, oder statistische Propylen-Butylen-1-Copolymere mit einem Butylengehalt von 2 bis 25 Gew.-%, bevorzugt 4 bis 20 Gew.-%, jeweils bezogen auf das Gesamtgewicht des Copolymeren, oder
statistische Ethylen-Propylen-Butylen-1-Terpolymere mit einem Ethylengehalt von 1 bis 20 Gew.-%, bevorzugt 2 bis 6 Gew.-%, und einem Butylen-1-Gehalt von 2 bis 20 Gew.-%, bevorzugt 4 bis 20 Gew.-%, jeweils bezogen auf das Gesamtgewicht des Terpolymeren, oder
ein Blend oder eine Mischung aus einem Ethylen-Propylen-Butylen-1-Terpolymeren und einem Propylen-Butylen-1-Copolymeren mit einem Ethylengehalt von 0,1 bis 7 Gew.-% und einem Propylengehalt von 50 bis 90 Gew.-% und einem Butylen-1-Gehalt von 10 bis 40 Gew.-%, jeweils bezogen auf das Gesamtgewicht des Blend oder der Mischung.

Die geeigneten vorstehend beschriebenen Propylen-, Co- und/oder Terpolymeren weisen im allgemeinen einen Schmelzflußindex von 1,5 bis 30 g/10 min, vorzugsweise von 3 bis 15 g/10 min, auf. Der Schmelzpunkt liegt im Bereich von 100 bis 140 °C. Das vorstehend beschriebene Blend aus Propylen-, Co- und Terpolymeren hat einen Schmelzflußindex von 5 bis 9 g/10 min und einen Schmelzpunkt von 100 bis 150 °C. Alle vorstehend angegebenen Schmelzflußindices werden bei 230 °C und einer Kraft von 21,6 N (DIN 53 735) gemessen.

Die geeigneten Propylenhomopolymeren weisen im allgemeinen einen Schmelzflußindex von 1,5 bis 30 g/10 min, vorzugsweise von 3 bis 15 g/10 min, auf. Der Schmelzpunkt der Homopolymeren liegt im Bereich von 150 bis 170°C, vorzugsweise 155 bis 165°C. Bevorzugt sind isotaktische Propylen-Homopolymere deren Isotaktizität größer 92% ist, vorzugsweise im Bereich von 94 bis 98% liegt. Der n-heptan lösliche Anteil der isotaktischen Propylenhomopolymeren beträgt weniger als 10 Gew.-%, vorzugsweise 1 bis 8 Gew.-% bezogen auf das Gewicht des Homopolymeren. Alle vorstehend angegebenen Schmelzflußindices werden bei 230 °C und einer Kraft von 21,6 N (DIN 53 735) gemessen.

Für die Mischung geeignete Polyethylene umfassen grundsätzlich alle Homo- oder Copolymerisate, welche überwiegend, d.h. mindestens 50 Gew.-%, vorzugsweise 80 bis 100 Gew.-% Ethyleneinheiten enthalten, beispielsweise LDPE, MDPE und HDPE. Beispielsweise können Polyethylene mit einer Dichte im Bereich 0,88 bis 0,93 und einem Kristallitschmelzpunkt im Bereich von 100 bis 120 °C eingesetzt werden. Der Schmelzflußindex beträgt bevorzugt 0,1 bis 10 g/10min (190/2, 16). Derartige Polyethylene niedriger Dichte sind als LDPE, LLDPE oder VLPE im Stand der Technik an sich bekannt. Diese Polyethylene niedriger Dichte weisen Molekülverzweigungen mit unterschiedlich langen Seitenketten auf und werden daher auch als verzweigte Polyethylene bezeichnet.

Polyethylene hoher und mittlerer Dichte sind als Polymer II ebenfalls geeignet. Hierbei kommen ebenfalls Ethylenhomopolymerisate und Ethylencopolymerisate in Frage. Diese Polymeren haben in der Regel wenige und kurze Seitenketten und entsprechend höhere Kristallinitäten. Der Kristallisationsgrad liegt im Bereich von 50 bis 90%. Die Dichte beträgt für MDPE >0,93 bis 0,945 g/cm3, der Schmelzflußindex (190/2, 16) 0,1 bis 1 g/10min, der Kristallitschmelzpunkt 110 bis 130°C. Für HDPE beträgt die Dichte >0,945 bis 0,96 g/cm3, der Schmelzflußindex (190/2, 16) 0,1 bis 1 g/10min, und der Kristallitschmelzpunkt 130 bis 150°C.

Als Comonomere in Polyethylenen werden im allgemeinen olefinische Monomere eingesetzt, worunter kurzkettige Olefine mit 3 bis 6 C-Atomen, insbesondere Propylen und/oder Butylen bevorzugt sind.

Die vorstehend genannten Polyethylene sind an sich im Stand der Technik bekannt und sind bereits als Komponenten in biaxial orientierten Polypropylenfolien beschrieben. Für die Zwecke der vorliegenden Erfindung sind HDPE besonders bevorzugt.

Geeignete thermoplastische Polyester sind die an sich bekannten aromatischen Polyester aus aromatischen Dicarbonsäuren und mehrwertigen Alkoholen. Aromatische Dicarbonsäuren sind beispielsweise Terephtalsäure, Benzoldicarbonsäure, Naphtalin-2,6-dicarbonsäure oder Isophtalsäure, mehrwertige Alkoholen sind z.B. Diethylenglykol, Triethylenglykol, Ethandiol oder Butandiole. Besonders bevorzugt sind Polyester aus Ethylenglykol oder Butylenglykol und Terephtalsäure, welche auch als PET oder PBT bezeichnet werden.

Darüber hinaus können vorteilhaft an sich bekannte Copolyester eingesetzt werden, welche auch als PET G bekannt sind und auf Basis drei verschiedener Monomere basieren, im allgemeinen mindestens zwei verschiedene mehrwertigen Alkohole und eine Dicarbonsäure. Derartige Copolyester, welche für die Zwecke der vorliegenden Erfindung besonders geeignet sind, sind in der EP 0 418 836, Seite 2 Zeilen 42 bis Seite 3, Zeile 1 beschrieben. Auf diese Beschreibung wird hiermit ausdrücklich Bezug genommen.

Besonders vorteilhaft werden als thermoplastisches Polymer II solche Polypropylene, Polyethylene oder Polyester ausgewählt, welche bekannterweise zur Herstellung von oder in biaxial orientierten Folie aus den genannten Polymeren eingesetzt werden.

In einer weiteren Ausführungsform können an Stelle der Polymeren II oder zusätzlich zu diesen Polymeren II anorganische Zusatzstoffe in der Basisschicht enthalten sein. Anorganische Zusatzstoffe umfassen im Rahmen der vorliegenden Erfindung Materialien wie z. B. Aluminiumoxid, Aluminiumsulfat, Bariumsulfat, Calciumcarbonat, Magnesiumcarbonat, Silicate wie Aluminiumsilicat (Kaolinton) und Magnesiumsilicat (Talkum), Siliciumdioxid und Titandioxid, worunter Calciumcarbonat, Siliciumdioxid, Titandioxid und Bariumsulfat bevorzugt eingesetzt werden. Im allgemeinen beträgt der mittlere Teilchendurchmesser der anorganischen Zusatzstoffe 0,1 bis 6 µm, vorzugsweise 1,0 bis 5 µm. Diese anorganischen Zusatzstoffe sind an sich im Stand der Technik bekannt und werden beispielsweise in Polypropylenfolien als weiß oder bunt einfärbende Pigmente oder vakuoleninitierende Füllstoffe verwendet. Im Rahmen der vorliegenden Erfindung wurde keine Bildung von Vakuolen durch diese anorganischen Zusatzstoffe in einer Polymermatrix aus PLA beobachtet. Überraschenderweise tragen aber diese Substanzen in der Polymermatrix aus PLA zu dem guten und kontrollierbarem Reißverhalten der Folie bei.

Zusätzlich zu den genannten Polymeren I und II oder den anorganischen Zusatzstoffen kann die Basisschicht übliche Additive wie Neutralisationsmittel, Stabilisatoren, Antistatika, und/oder Gleitmittel in jeweils wirksamen Mengen enthalten.

Die Folie umfaßt gegebenenfalls eine oder beidseitig Deckschicht/en aus Polyhydroxycarbonsäuren, welche auf der Basisschicht oder auf zusätzlichen Zwischenschichten, aufgebracht ist/sind. Die Deckschicht/en enthält/enthalten im allgemeinen 85 bis 100 Gew.-% Polyhydroxysäuren, vorzugsweise 90 bis <100Gew.-% Polyhydroxysäuren und 0 bis 15 Gew.%, bzw. >0 bis 10 Gew.-%, üblicher Additive:, jeweils bezogen auf das Gewicht der Deckschicht/en.

Beispiele für geeignete Polyhydroxysäuren der Deckschicht/en sind Poylmilchsäuren, welche ausschließlich aus Milchsäureeinheiten aufgebaut sind. Hierbei sind insbesondere PLA-Polymere bevorzugt, welche 80-100 Gew.-% L-Milchsäureeinheiten, entsprechend 0 bis 20 Gew.-% D-Milchsäureeinheiten, enthalten. Zur Verringerung der Kristallinität können auch noch höhere Konzentrationen D-Milchsäureeinheiten als Comonomer enthalten sein. Gegebenenfalls kann die Polymilchsäure zusätzliche von der Milchsäure verschiedene Polyhydroxysäureeinheiten als Comonomer wie für die Basisschicht beschrieben aufweisen.

Für die Deckschicht/en sind Milchsäurepolymere mit einem Schmelzpunkt von 110 bis 170°C, vorzugsweise von 125 bis 165°C, und einen Schmelzflußindex (Messung DIN 53 735 bei 2,16 N Belastung und 190°C) von 1 bis 50 g/10 min, vorzugsweise von 1 bis 30 g/10 min bevorzugt. Das Molekulargewicht des PLA liegt in einem Bereich von mindestens 10.000 bis 500.000 (Zahlenmittel), vorzugsweise 50.000 bis 300.000 (Zahlenmittel). Die Glasübergangstemperaur Tg liegt in einem Bereich von 40 bis 100°C, vorzugsweise 40 bis 80°C.

In einer weiteren Ausführungsform kann/können die Deckschicht/en auch aus den vorstehend für die Basisschicht beschriebenen Mischungen aus Polymeren I auf Basis von Hydroxycarbonsäure und thermoplastischen Polymeren II und/oder anorgaischen Zusatzstoffen aufgebaut sein. Grundsätzlich sind alle vorstehend für die Basisschicht beschriebene Mischungen aus Polymer I und II und/oder anorganischen Zusatzstoffen auch für die Deckschicht geeignet.

Gegebenenfalls können der/den Deckschicht/en die vorstehend für die Basisschicht beschriebenen Additive wie Antistatika, Neutralisationsmittel, Gleitmittel und/oder Stabilisatoren, sowie gegebenenfalls zusätzlich Antiblockmittel zugesetzt werden.

Die Dicke der Deckschicht/en ist größer als 0,1 µm und liegt vorzugsweise im Bereich von 0,1 bis 5µm, insbesondere 0,5 bis 3 µm, wobei beidseitige Deckschichten gleich oder verschieden dick sein können. Die Gesamtdicke der erfindungsgemäßen Folie kann variieren und beträgt vorzugsweise 5 bis 80 µm, insbesondere 8 bis 50 µm, wobei die Basisschicht bei mehrschichtigen Ausführungsformen etwa 40 bis 98 % der Gesamtfoliendicke ausmacht. Für besonders umweltfreundliche Verpackungen ist es bevorzugt besonders dünne Folien mit einer Dicke von 5 bis 20 µm, vorzugsweise 5 - 15µm einzusetzen. Überraschenderweise zeigen die Folie mit dieser Dicke noch das gewünschte Reißverhalten.

Die einschichtige oder mehrschichtige biaxial orientierte Folie wird nach dem an sich bekannten Stenterverfahren hergestellt werden. Im Rahmen dieses Verfahrens werden die den einzelnen Schichten der Folie entsprechenden Schmelzen durch eine Flachdüse extrudiert oder coextrudiert, die so erhaltene Folie zur Verfestigung auf einer oder mehreren Walze/n abgezogen, die Folie anschließend gestreckt (orientiert), die gestreckte Folie thermofixiert.

Eine biaxiale Streckung (Orientierung) wird sequentiell durchgeführt, wobei die aufeinanderfolgende biaxiale Streckung, bei der zuerst längs (in Maschinenrichtung) und dann quer (senkrecht zur Maschinenrichtung) gestreckt wird, bevorzugt ist. Es wurde gefunden, daß eine simultane Verstreckung in beide Richtung leicht zu Rissen in der Folie bis hin zu Abrißen führt. Daher ist ein Simultanverfahren oder Blasverfahren zur Herstellung der Folie im allgemeinen nicht geeignet. Die weitere Beschreibung der Folienherstellung erfolgt am Beispiel einer Flachfolienextrusion mit anschließender sequentialer Streckung.

Hierbei wird wie beim Extrusionsverfahren üblich das Polymere bzw. die Polymermischung der einzelnen Schichten in einem Extruder komprimiert und verflüssigt, wobei die gegebenenfalls zugesetzten Additive bereits im Polymer bzw. in der Polymermischung enthalten sein können. Gegebenfalls können die thermoplastischen Polymeren II und/oder die anorganischen Zusatzstoffe als Masterbatch in die Basisschicht eingearbeitet werden. Diese Masterbatche basieren auf PLA und enthält thermoplastisches Polymer wie PP, PE oder PET oder die anorganischen Zusatzstoffe in einer Konzentration von 5 bis 40 Gew.-% bezogen auf das Batch. In einer weiteren Ausführungsform des Verfahrens werden die Komponenten der Mischung in den entsprechenden Konzentrationen in einem separaten Granulierungschritt mittels Schmelzeextrusion vermischt werden.

Die Schmelze/n werden dann durch eine Flachdüse (Breitschlitzdüse) gepreßt, und die ausgepreßte Folie wird auf einer oder mehreren Abzugswalzen bei einer Temperatur von 10 bis 100°C, vorzugsweise 20 bis 60°C, abgezogen, wobei sie abkühlt und sich verfestigt.

Die so erhaltene Folie wird dann längs und quer zur Extrusionsrichtung gestreckt, was zu einer Orientierung der Molekülketten führt. Das Längsstrecken wird man vorzugsweise bei einer Temperatur von 50 bis 150°C zweckmäßigerweise mit Hilfe zweier entsprechend dem angestrebten Streckverhältnis verschieden schnell laufender Walzen durchführen und das Querstrecken vorzugsweise bei einer Temperatur von 50 bis 150°C mit Hilfe eines entsprechenden Kluppenrahmens. Die Längsstreckverhältnisse liegen im Bereich von 1,5 bis 6 vorzugsweise 2 bis 5. Die Querstreckverhältnisse liegen im Bereich von 3 bis 10, vorzugsweise 4 bis 7. Es wurde gefunden, daß der Zusatz von thermoplastischem Polymer II und/oder anorganischen Zusatzstoffen die Anwendung höhere Längs- und Querstreckverhältnisse im Vergleich zu einer PLA Folie ohne derartige Zusätze ermöglicht.

An die Streckung der Folie schließt sich ihre Thermofixierung (Wärmebehandlung) an, wobei die Folie etwa 0,1 bis 10 s lang bei einer Temperatur von 60 bis 150°C gehalten wird. Anschließend wird die Folie in üblicher Weise mit einer Aufwickeleinrichtung aufgewickelt.

Die Erfindung wird nachstehend an Hand von Ausführungsbeispielen erläutert

### Beispiel 1:

Es wurde durch Extrusion und anschließende stufenweise Orientierung in Längs- und Querrichtung eine einschichtige Folie mit einer Dicke von 15 µm hergestellt. Die Schicht war zu ca. 99 % aus einer Polymilchsäure mit einem Schmelzpunkt von 135°C und einem Schmelzflußindex von ca. 3 g/10min und einer Glastemperatur von um 60 °C aufgebaut, zu ca. 1 % aus einem Propylenhomopolymeren (Handelsname Escorene PP4352F1) und enthielt Stabilisatoren und Neutralisationsmittel in üblichen Mengen. Die Herstellbedingungen in den einzelnen Verfahrensschritten waren:

| | | |
|---|---|---|
| Extrusion | Temperaturen Basisschicht | 195 °C |
| | Temperatur der Abzugswalze | 50 °C |
| Längsstreckung | Temperatur | 68 °C |
| | Längsstreckverhältnis | 4,0 |
| Querstreckung | Temperatur | 88 °C |
| | Querstreckverhältnis (effektiv) | 5,5 |
| Fixierung | Temperatur | 100 °C |
| | Konvergenz | 5 % |

### Beispiel 2:

Es wurde durch Extrusion und anschließende stufenweise Orientierung in Längs- und Querrichtung wie in Beispiel 1 beschrieben eine einschichtige Folie mit einer Dicke von 15 µm hergestellt. Abweichend zu Beispiel 1 war die Schicht war zu ca. 99 % aus einer Polymilchsäure mit einem Schmelzpunkt von 135°C und einem Schmelzflußindex von ca. 3 g/10min und einer Glastemperatur von um 60 °C aufgebaut, zu ca. 1 % aus einem Polyethylen (Handelsname LDPE PG 7004, hergestellt von der Firma Dow) und enthielt Stabilisatoren und Neutralisationsmittel in üblichen Mengen.

### Beispiel 3:

Es wurde durch Extrusion und anschließende stufenweise Orientierung in Längs- und Querrichtung wie in Beispiel 1 beschrieben eine einschichtige Folie mit einer Dicke von 15 µm hergestellt. Abweichend zu Beispiel 1 war die Schicht war zu ca. 99 % aus einer Polymilchsäure mit einem Schmelzpunkt von 135°C und einem Schmelzflußindex von ca. 3 g/10min und einer Glastemperatur von um 60 °C aufgebaut, zu ca. 1 % aus einem Polyester (Eastar PETG6763, hergestellt von der Firma Eastman) und enthielt Stabilisatoren und Neutralisationsmittel in üblichen Mengen.

### Beispiel 4

Es wurde durch Coextrusion und anschließende stufenweise Orientierung in Längs- und Querrichtung eine dreischichtige Folie mit symmetrischem Aufbau mit einer Gesamtdicke von 20 µm hergestellt. Die Deckschichten hatten eine Dicke von jeweils 1,5 µm. Die Basisschicht war wie in Beispiel 1 beschrieben zu ca. 99 % aus einer Polymilchsäure mit einem Schmelzpunkt von 135°C und einem Schmelzflußindex von ca. 3 g/10min und einer Glastemperatur von um 60 °C aufgebaut, zu ca. 1 % aus einem Polypropylen (Handelsname Escorene PP4352F1) und enthielt Stabilisatoren und Neutralisationsmittel in üblichen Mengen. Die Deckschichten waren zu ca. 99 % aus einer Polymilchsäure mit einem Schmelzpunkt von 135°C und einem Schmelzflußindex von ca. 3 g/10min und einer Glastemperatur von um 60 °C aufgebaut, zu ca. 1 % aus einem Polypropylen (Handelsname Escorene PP4352F1) und enthielten Stabilisatoren und Neutralisationsmittel sowie Gleitmittel und Antistatika in üblichen Mengen.

Die Herstellbedingungen in den einzelnen Verfahrensschritten waren:

| | | |
|---|---|---|
| Extrusion | Temperaturen Basisschicht | 195 °C |
| | Deckschichten | 175 °C |
| | Temperatur der Abzugswalze | 50 °C |
| Längsstreckung | Temperatur | 68 °C |
| | Längsstreckverhältnis | 3 |
| Querstreckung | Temperatur | 85 °C |
| | Querstreckverhältnis (effektiv) | 5,5 |
| Fixierung | Temperatur | 75 °C |
| | Konvergenz | 5 % |

### Beispiel 5:

Es wurde durch Coextrusion und anschließende stufenweise Orientierung in Längs- und Querrichtung eine dreischichtige Folie mit symmetrischem Aufbau mit einer Gesamtdicke von 20 µm hergestellt. Die Deckschichten hatten eine Dicke von jeweils 1,5 µm. Die Basisschicht war zu ca. 99 % aus einer Polymilchsäure mit einem Schmelzpunkt von 135°C und einem Schmelzflußindex von ca. 3 g/10min und einer Glastemperatur von um 60 °C aufgebaut, zu ca. 0,5 % aus einem Polypropylen (Handelsname Escorene PP4352F1) und zu ca. 0,5 % aus einem Polyester (Handelsname Eastar PETG6763, hergestellt von der Firma Eastman) und enthielt Stabilisatoren und Neutralisationsmittel sowie Gleitmittel und Antistatika in üblichen Mengen.

Die Herstellbedingungen in den einzelnen Verfahrensschritten waren:

| | | |
|---|---|---|
| Extrusion | Temperaturen Basisschicht | 195 °C |
| | Deckschichten | 175 °C |
| | Temperatur der Abzugswalze | 50 °C |
| Längsstreckung | Temperatur | 68 °C |
| | Längsstreckverhältnis | 3 |
| Querstreckung | Temperatur | 85 °C |
| | Querstreckverhältnis (effektiv) | 5,5 |
| Fixierung | Temperatur | 75 °C |
| | Konvergenz | 5 % |

## Patentansprüche

1. Biaxial verstreckte Folie, **dadurch gekennzeichnet, daß** die Folie mindestens eine Basisschicht umfaßt, welche mindestens ein Polymeres I aus mindestens einer Hydroxycarbonsäure und ≥ 0,1 - 15 Gew.-%, bezogen auf das Gewicht der Schicht anorganische Zusatzstoffe enthält.

2. Biaxial verstreckte Folie, **dadurch gekennzeichnet, daß** die Folie mindestens eine Basisschicht umfaßt, welche mindestens ein Polymeres I aus mindestens einer Hydroxycarbonsäure und ≥ 0,1 Gew.-%, bezogen auf das Gewicht der Schicht eines Propylenpolymer oder Polyethylenpolymer enthalten.

3. Biaxial verstreckte Folie, **dadurch gekennzeichnet, daß** die Folie mindestens eine Basisschicht umfaßt, welche mindestens ein Polymeres I aus mindestens einer Hydroxycarbonsäure und ≥ 0,1 - 15 Gew.-%, bezogen auf das Gewicht der Schicht, eines, von dem Polymeren I verschiedenen, thermoplastischen Polymeren II und anorganische Zusatzstoffe enthält.

4. Folie nach Anspruch 1, 2, oder 3 **dadurch gekennzeichnet, daß** das Polymere I eine Polymilchsäure ist.

5. Folie nach Anspruch 1, 2, oder 3, **dadurch gekennzeichnet, daß** das Polymere I eine Polymilchsäure ist, welche 80 - 100 Gew.-% L-Milchsäureeinheiten und 0 bis 20 Gew.-% D-Milchsäureeinheiten oder andere Polyhydroxycarbonsäureeinheiten aufweist.

6. Folie nach Anspruch 2 oder 3, **dadurch gekennzeichnet, daß** das Propylenpolymer ein Propylenhomopolymer oder Propylencopolymer und das, Polyethylen ein HDPE, ein LDPE oder ein MDPE ist.

7. Folie nach einem der Ansprüche 1 bis 6, **dadurch gekennzeichnet, daß** die Basisschicht das Polymere I in einer Menge von 90 bis 99,5 Gew.-% und das Propylenpolymer oder Polyethylenpolymere und/oder die anorganischen Zusatzstoffe in einer Menge von 0,5 bis 10 Gew.-% jeweils bezogen auf die Schicht, enthält.

8. Folie nach einem der Ansprüche 1 bis 7, **dadurch gekennzeichnet, daß** die biaxial orientierte Folie eine Dicke von 5 bis 80 µm, vorzugsweise 5 bis 20 µm aufweist.

9. Verwendung einer biaxial gestreckten Folie nach einem der Ansprüche 1 bis 8 zur Herstellung einer Verpackung mit kontrolliertem Weiterreißverhalten.

10. Faden oder Bändchen hergestellt aus einer Folie nach einem der Ansprüche 1 bis 8.

11. Verwendung eines Faden oder Bändchen nach Anspruch 10 als Aufreißfaden oder Aufreißband .

## Claims

1. A biaxially stretched film, **characterized in that** the film comprises at least one base layer, which contains at least one polymer I made of at least one hydroxycarboxylic acid and ≥ 0.1 - 15 weight-percent, in relation to the weight of the layer, of inorganic additives.

2. A biaxially stretched film, **characterized in that** the film comprises at least one base layer, which contains at least one polymer I made of at least one hydroxycarboxylic acid and ≥ 0.1 weight-percent, in relation to the weight of the layer, of a propylene polymer or polyethylene polymer.

3. A biaxially stretched film, **characterized in that** the film comprises at least one base layer, which contains at least one polymer I made of at least one hydroxycarboxylic acid and ≥ 0.1 - 15 weight-percent, in relation to the weight of the layer, of a thermoplastic polymer II, which is different from the polymer I, and inorganic additives.

4. The film according to claim 1, 2, or 3, **characterized in that** the polymer I is a polylactic acid.

5. The film according to claim 1, 2, or 3, **characterized in that** the polymer I is a polylactic acid which has 80 - 100 weight-percent L-lactic acid units and 0 to 20 weight-percent D-lactic acid units or other polyhydroxycarboxylic acid units.

6. The film according to claim 2 or 3, **characterized in that** the propylene polymer is a propylene homopolymer or propylene copolymer and the polyethylene is an HDPE, an LDPE, or an MDPE.

7. The film according to one of claims 1 through 6, **characterized in that** the base layer contains the polymer I in a quantity of 90 to 99.5 weight-percent and the propylene polymer or polyethylene polymer and/or the inorganic additives in a quantity of 0.5 to 10 weight-percent, each in relation to the layer.

8. The film according to one of claims 1 through 7, **characterized in that** the biaxially oriented film has a thickness of 5 to 80 µm, preferably 5 to 20 µm.

9. A use of a biaxially stretched film according to one of claims 1 through 8 for manufacturing a package having controlled tear propagation behavior.

10. A thread or tape manufactured from a film according to one of claims 1 through 8.

11. A use of a thread or tape according to claim 10 as a tear thread or tear strip.

## Revendications

1. Feuille étirée de manière biaxiale, **caractérisée en ce que** la feuille comprend au moins une couche de base qui contient au moins un polymère I constitué d'au moins un acide hydroxycarboxylique et de ≥ 0,1 - 15 % en poids, par rapport au poids de la couche, d'additifs inorganiques.

2. Feuille étirée de manière biaxiale, **caractérisée en ce que** la feuille comprend au moins une couche de base qui contient au moins un polymère I constitué d'au moins un acide hydroxycarboxylique et de ≥ 0,1 % en poids, par rapport au poids de la couche, d'un polymère de propylène ou d'un polymère de polyéthylène.

3. Feuille étirée de manière biaxiale, **caractérisée en ce que** la feuille comprend au moins une couche de base qui contient au moins un polymère I constitué d'au moins un acide hydroxycarboxylique et de ≥ 0,1 - 15 % en poids, par rapport au poids de la couche, d'un polymère II thermoplastique différent du polymère I et d'additifs inorganiques.

4. Feuille selon la revendication 1, 2 ou 3, **caractérisée en ce que** le polymère I est un acide polylactique.

5. Feuille selon la revendication 1, 2 ou 3, **caractérisée en ce que** le polymère I est un acide polylactique qui présente 80 à 100 % en poids de motifs d'acide L-lactique et 0 à 20 % en poids de motifs d'acide D-lactique ou d'autres motifs d'acide polyhydroxycarboxylique.

6. Feuille selon la revendication 2 ou 3, **caractérisée en ce que** le polymère de propylène est un homopolymère de propylène ou un copolymère de propylène et le polyéthylène est un HDPE, un LDPE ou un MDPE.

7. Feuille selon l'une quelconque des revendications 1 à 6, **caractérisée en ce que** la couche de base contient le polymère I en une quantité allant de 90 à 99,5 % en poids et le polymère de propylène ou les polymères de polyéthylène et/ou les additifs inorganiques en une quantité allant de 0,5 à 10 % en poids, à chaque fois par rapport à la couche.

8. Feuille selon l'une quelconque des revendications 1 à 7, **caractérisée en ce que** la feuille orientée de manière biaxiale présente une épaisseur allant de 5 à 80 µm, de préférence de 5 à 20 µm.

9. Utilisation d'une feuille étirée de manière biaxiale selon l'une quelconque des revendications 1 à 8 en vue de la fabrication d'un emballage avec un comportement à la propagation de déchirement contrôlé.

10. Fil ou bandelette fabriqué(e) à partir d'une feuille selon l'une quelconque des revendications 1 à 8.

11. Utilisation d'un fil ou d'une bandelette selon la revendication 10 en tant que fil de déchirage ou bande de déchirage.
